# EUROPEAN PATENT APPLICATION

(11) **EP 1 693 579 A2**
(43) Date of publication of application: **23.08.2006**
(21) Application number: 06002972.5
(22) Date of filing: 14.02.2006
(51) Int. Cl.: F16C 3/035

(54) **Telescopic shaft**

(30) Priority: 16.02.2005 JP 2005039395
(71) Applicant: NSK LTD., Shinagawa-ku, Tokyo (JP)
(72) Inventor: Yamada, Yasuhisa, Maebashi-shi Gunma (JP)
(74) Representative: Grünecker, Kinkeldey, Stockmair & Schwanhäusser Anwaltssozietät

(57) **Abstract**

A surface hardening treatment is applied to an inner peripheral surface of a female shaft 2, thereby forming a hard layer Ha thereon. Surface harness of the hard layer is 400 Hv or more. The thickness of the hard layer Ha is 10 µm to 100 µm, and for example gas nitrocarburizing treatment is performed as the surface hardening treatment. A surface hardening treatment is also applied to an outer surface of each cylindrical member 8 by a heat treatment, thereby forming a hard layer Hb thereon. With this construction, the inner peripheral surface of the female shaft is prevented from deformation and wear under a high contact pressure, so that the smooth sliding movement can be obtained.

## Description

The present invention claims foreign priority to Japanese patent application No. P.2005-039395, filed on February 16, 2005, the contents of which is incorporated herein by reference.

### BACKGROUND OF THE INVENTION

### 1. Field of the Invention

This invention relates to a telescopic shaft which comprises a male shaft and a female shaft which are slidably fitted together in a manner to prevent a relative rotation therebetween, and more particularly, to a vehicular telescopic shaft incorporated in a steering shaft of a vehicle.

### 2. Description of the Background Art

An telescopic shaft of a steering mechanism portion of an automobile is required to have the ability of absorbing an axial displacement, developing during the travel of the automobile so that this displacement and vibrations will not be transmitted to a steering wheel. Also, the telescopic shaft is required to have the function of enabling the steering wheel to be moved in the axial direction so as to adjust its position so that the driver can take the optimum position for driving the automobile.

In either case, the telescopic shaft is required to reduce rattling noise, a rattle feeling on the steering wheel and a sliding resistance offered during the axial sliding movement.

Therefore, in the conventional telescopic shaft, a nylon film is coated on the male shaft, and grease is coated on slide portions, and by doing so, metal noise and metal striking sounds have been absorbed or reduced, and at the same time the sliding resistance, as well as rattling in the rotational movement, has been reduced.

However, in the course of use, wear of the nylon film proceeds, so that the rattling in the rotational movement often increases. And besides, under a condition in which the telescopic shaft is exposed to a high temperature within an engine room, the nylon film is changed in volume to offer a very large sliding resistance, and also its wear is much promoted, so that the rattling in the rotational movement often increases.

Under the circumstances, in German Patent Examined Publication No. DE 3 730 393 C2, a plurality of pairs of axial grooves are formed in an outer peripheral surface of a male shaft and an inner peripheral surface of a female shaft, and a row of torque transmitting members (spherical members) are fitted in each pair of axial grooves, and these torque transmitting members roll when the two shafts move relative to each other in the axial direction.

In the DE 3 730 393 C2, a leaf spring for preloading is provided between a radially inward or outward side of each row of spherical members and the corresponding axial groove, thereby preloading the male and female shafts through the torque transmitting members.

With this construction, when torque is not transmitted, rattling between the male shaft and the female shaft can be prevented since the spherical members are preloaded on the female shaft by the leaf springs to such a degree that the rattling will not occur. Therefore, the male and female shafts can slid in the axial direction with a stable sliding load.

When a torque is transmitted, the spherical members are restrained in the circumferential direction by the leaf springs, and therefore the male and female shafts can transmit the torque in a highly-rigid condition while preventing rattling between the two shafts.

Besides, in a structure disclosed in Figs. 1 to 5 of the DE 3 730 393 C2, any two circumferentially-adjacent leaf springs, each preloading the corresponding row of torque transmitting members (spherical members), are circumferentially interconnected by a web (interconnecting portion) of an arcuate shape extending in the circumferential direction.

The interconnecting portion (web) serves to exert a tensile force or a compressive force on the two adjacent leaf springs, thereby causing the leaf springs to exert a preload.

In a structure shown in Figs. 6 and 7 of the DE 3 730 393 C2, the two adjacent leaf springs are not interconnected by the interconnecting portion (web), and instead a separate resilient member is interposed between the leaf spring and the axial groove, thereby exerting a preload in the radial direction.

In Japanese Patent Unexamined Publication No. JP-A-2000-009148, a coating is formed on a spline portion in order to achieve low sliding resistance without rattling.

In the above telescopic shafts, when the steering shaft transmits a large torque, relative displacement occurs between a steering gear and a steering column of the vehicle, and the slide portions, while transmitting the high torque, need to smoothly slide.

In the DE 3 730 393 C2, however, the torque transmission by the balls and the resilient members is limited, and a failure will be encountered particularly in the type of steering system such as a column-type EPS (electric power steering apparatus) in which an excessive torque (for example of 70 to 100 Nm) is input in an intermediate shaft when the steering wheel is steered in a stopped condition of the vehicle.

In the JP-A-2000-009148, the coated spline portion must slide while undergoing a high contact pressure, and therefore the coating peels off from the spline portion during use. When the coating peels off, the sliding movement can not be effected smoothly, so that stick slip occurs, and this becomes a main cause for the generation of unpleasant vibration and abnormal noise.

Therefore, it is necessary to transmit a high torque while keeping the deterioration of the torque-transmitting portion to a minimum, thereby maintaining the smooth sliding movement.

### SUMMARY OF THE INVENTION

This invention has been made in view of the above circumstances, and an object of the invention is to provide a telescopic shaft which can transmit a high torque while keeping the deterioration of a torque-transmitting portion to a minimum, thereby maintaining a smooth sliding movement.

According to a first aspect of the invention, there is provided a telescopic shaft comprising:
a male shaft and a female shaft which are slidably fitted together in a manner to prevent a relative rotation therebetween;
a preloadingly-acting torque transmitting portion for transmitting torque between the male and female shafts in a manner to preload the two shafts, the preloadingly-acting torque transmitting portion comprising:
   at least one axial groove formed in an outer peripheral surface of the male shaft;
   at least one axial groove formed in an inner peripheral surface of the female shaft; and
   a first torque transmitting member interposed between the two axial grooves through a resilient member; and
a rigidly-acting torque transmitting portion for transmitting the torque between the male and female shafts through contact of rigid members, the rigidly-acting torque transmitting portion includes:
   at least one axial groove formed in the outer peripheral surface of the male shaft;
   at least one axial groove formed in the inner peripheral surface of the female shaft; and
   a second torque transmitting member interposed between the two axial grooves,
wherein contact portions of the rigidly-acting torque transmitting portion have surface hardness of Hv 400 or more.

According to a second aspect of the invention, there is provided a telescopic shaft comprising:
a male shaft and a female shaft which are slidably fitted together in a manner to prevent a relative rotation therebetween;
a preloadingly-acting torque transmitting portion for transmitting torque between the male and female shafts in a manner to preload the two shafts, the preloadingly-acting torque transmitting portion comprising:
   at least one axial groove formed in an outer peripheral surface of the male shaft;
   at least one axial groove formed in an inner peripheral surface of the female shaft; and
   a first torque transmitting member interposed between the two axial grooves through a resilient member; and
a rigidly-acting torque transmitting portion for transmitting the torque between the male and female shafts through contact of rigid members, the rigidly-acting torque transmitting portion includes:
   at least one axial groove formed in the outer peripheral surface of the male shaft;
   at least one axial groove formed in the inner peripheral surface of the female shaft; and
   a second torque transmitting member interposed between the two axial grooves,
wherein the second torque transmitting member has hardness of Hv 400 or more, and
the axial groove, which contacts with the second torque transmitting member and which is also formed on the male or female shaft, has hardness of Hv 400 or more.

According to a third aspect of the invention, as set forth in the first aspect of the invention, it is preferable that the first torque transmitting member comprises rolling members which roll when the male and female shafts move relative to each other in their axial direction, and
the second torque transmitting member comprises a slide member which slides when the male and female shafts move relative each other in their axial direction.

According to a fourth aspect of the invention, as set forth in the first aspect of the invention, it is preferable that
a surface hardening treatment is applied to an inner surface of the axial groove of the female shaft which contacts the second torque transmitting member, and
a surface hardening treatment is applied to the second torque transmitting member.

According to a fifth aspect of the invention, as set forth in the fourth aspect of the invention, it is preferable that in addition to the surface hardening treatment, fine pits and projections are formed uniformly on the second torque transmitting member by shot peening or tumbling.

According to a sixth aspect of the invention, as set forth in the fourth aspect of the invention, it is preferable that in addition to the surface hardening treatment, fine pits and projections are uniformly formed by shot peening on the inner surface of the axial groove of the female shaft which contacts the second torque transmitting member.

According to a seventh aspect of the invention, there is provided a telescopic shaft comprising:
a male shaft and a female shaft which are slidably fitted together in a manner to prevent a relative rotation therebetween;
a preloadingly-acting torque transmitting portion for transmitting torque between the male and female shafts in a manner to preload the two shafts, the preloadingly-acting torque transmitting portion comprising:
   at least one axial groove formed in an outer peripheral surface of the male shaft;
   at least one axial groove formed in an inner peripheral surface of the female shaft; and
   a first torque transmitting member interposed between the two axial grooves through a resilient member; and
a rigidly-acting torque transmitting portion for transmitting the torque between the male and female shafts through contact of rigid members, the rigidly-acting torque transmitting portion includes:
   at least one axial groove formed in the outer peripheral surface of the male shaft;
   at least one axial groove formed in the inner peripheral surface of the female shaft; and
   second torque transmitting portions formed on the respective two axial grooves formed on the male and the female shaft,
wherein the second torque transmitting portions of the rigidly-acting torque transmitting portion have surface hardness of Hv 400 or more.

According to an eighth aspect of the invention, as set forth in the seventh aspect of the invention, it is preferable that the male shaft and the female shaft fit each other so as to make up the second torque transmitting portions.

According to a ninth aspect of the invention, as set forth in the seventh aspect of the invention, it is preferable that the male shaft and the female shaft fit each other in a spline fitting manner so as to make up the second torque transmitting portions.

According to a tenth aspect of the invention, as set forth in the first aspect of the invention, it is preferable that the first torque transmitting member comprises at least one of spherical members.

According to an eleventh aspect of the invention, as set forth in the first aspect of the invention, it is preferable that the second torque transmitting member comprises at least one of cylindrical members.

According to a twelfth aspect of the invention, as set forth in the second aspect of the invention, it is preferable that the first torque transmitting member comprises at least one of spherical members.

According to a thirteenth aspect of the invention, as set forth in the second aspect of the invention, it is preferable that the second torque transmitting member' comprises at least one of cylindrical members.

According to a fourth aspect of the invention, as set forth in the seventh aspect of the invention, it is preferable that the first torque transmitting member comprises at least one of spherical members.

According to a fifteenth aspect of the invention, as set forth in the seventh aspect of the invention, it is preferable that the second torque transmitting member comprises at least one of cylindrical members.

According to a sixteenth aspect of the invention, as set forth in the first aspect of the invention, it is preferable that the telescopic shaft is used for a vehicular steering.

According to a seventeenth aspect of the invention, as set forth in the second aspect of the invention, it is preferable that the telescopic shaft is used for a vehicular steering.

According to an eighteenth aspect of the invention, as set forth in the seventh aspect of the invention, it is preferable that the telescopic shaft is used for a vehicular steering.

In the present invention, the contact portions of the rigidly-acting torque transmitting portion have surface hardness of Hv 400 or more, and therefore the telescopic shaft can transmit a high torque while keeping the deterioration of the torque-transmitting portion to a minimum, thereby maintaining the smooth sliding movement. Namely, the smooth sliding movement can be achieved even in a high torque-loaded condition.

### BRIEF DESCRIPTION OF THE DRAWINGS

Fig. 1A shows the steering mechanism portion provided with a column assist-type electric power steering apparatus;
Fig. 1B shows the steering mechanism portion without the electric power steering apparatus;
Fig. 2 is a longitudinal cross-sectional view of a first embodiment of a vehicle steering telescopic shaft of the invention;
Fig. 3 a longitudinal cross-sectional view of the first embodiment of the vehicle steering telescopic shaft of the invention;
Fig. 4 is a transverse cross-sectional view taken along the line IV-IV of Fig. 3;
Fig. 5A shows a second embodiment of the invention, and is a transverse cross-sectional view of a second embodiment of the present invention.
Fig. 5B is an enlarged cross-sectional view showing a portion of an outer surface of a cylindrical member of the second embodiment of the present invention;
Fig. 6 is a longitudinal cross-sectional view of a sixth embodiment of the present invention; and
Fig. 7 is a transverse cross-sectional view of the sixth embodiment of the present invention.

### DETAILED DESCRIPTION OF THE PREFERRED EMBODIMENTS

A preferred embodiment of a telescopic shaft of the present invention will now be described with reference to the drawings.

### (Overall Construction of Vehicle Steering Shaft System)

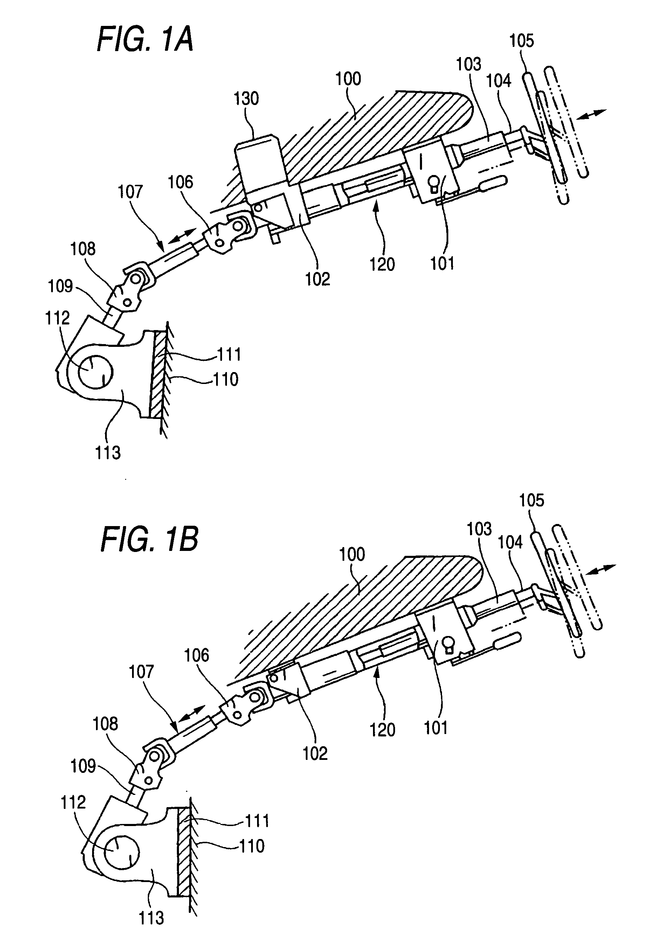

Fig. 1 is a side-elevational view showing a steering mechanism portion of an automobile to which the vehicle steering telescopic shaft of the invention is applied, and Fig. 1A shows the steering mechanism portion provided with a column assist-type electric power steering apparatus, while Fig. 1B shows the steering mechanism portion not provided with such electric power steering apparatus.

In Figs. 1A and 1B, the steering mechanism portion comprises an upper steering shaft portion 120 (including a steering column 103, and a steering shaft 104 rotatably held in the steering column 103) mounted on a member 100 of a vehicle body through an upper bracket 101 and a lower bracket 102, a steering wheel 105 mounted on an upper end of the steering shaft 104, a lower steering shaft portion 107 connected to a lower end of the steering shaft 104 via a universal joint 106, a pinion shaft 109 connected to the lower steering shaft portion 107 via a steering coupling 108, a steering rack shaft 112 coupled to the pinion shaft 109, and a steering rack support member 113 which supports the steering rack shaft 112, and is fixed to another member or frame 110 of the vehicle body through an elastic member 111.

Here, the vehicle steering telescopic shaft (hereinafter referred to merely as "telescopic shaft") of the invention is employed in each of the upper steering shaft portion 120 and the lower steering shaft portion 107. The lower steering shaft portion 107 comprises a male shaft, and a female shaft fitted in the male shaft, and such lower steering shaft portion 107 is required to have the ability of absorbing an axial displacement, developing during the travel of the automobile so that this displacement and vibrations will not be transmitted to the steering wheel 105. This ability is required in the case where the vehicle body has a sub-frame structure in which the member 100, fixing the upper portion of the steering mechanism, and the frame 110 to which the steering rack support member 113 is fixed are separate from each other, and the steering rack support member 113 is fixedly mounted on the frame 110 through the elastic member 111 such as a rubber member. The telescopic function may also be required in other cases such for example as the case where when coupling the steering coupling 108 to the pinion shaft 109, the worker once contracts the telescopic shaft, and then fits the steering coupling 108 on the pinion shaft 109. The upper steering shaft portion 120, provided at the upper portion of the steering mechanism, also comprises a male shaft, and a female shaft fitted in this male shaft. Such upper steering shaft portion 120 is required to have the ability of being expanded and contracted in the axial direction in order to provide the function of enabling the steering wheel 105 to be moved in the axial direction so as to adjust its position so that the driver can take the optimum position for driving the automobile. In all of the above cases, the telescopic shaft is required to reduce rattling noise generated from the fitted portions, also to reduce a rattle feeling on the steering wheel 105 and further to reduce a sliding resistance offered during the axial sliding movement.

Fig. 1A shows the automotive steering mechanism portion provided with the column assist-type electric power steering apparatus. In this steering mechanism portion, the column assist-type electric power steering apparatus 130 is provided, for example, on the lower bracket 102 or its vicinity. Preferred embodiments, which are described later, of the invention are suited for the system required to transmit a high torque produced by the column assist-type electric power steering apparatus 130.

### (First Embodiment)

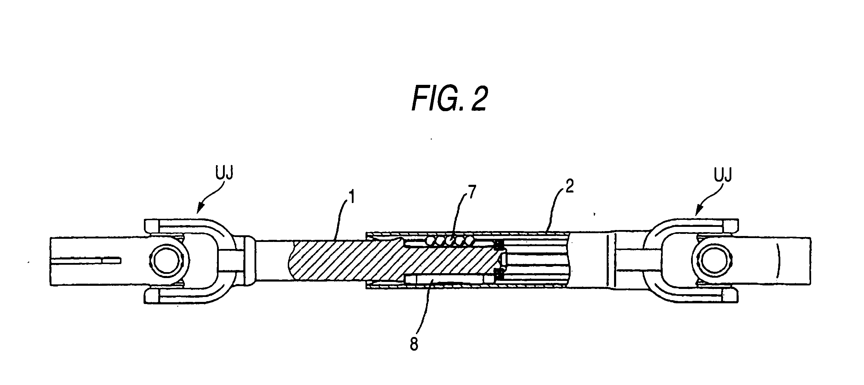

Fig. 2 is a longitudinal cross-sectional view of a first embodiment of a vehicle steering telescopic shaft of the invention.

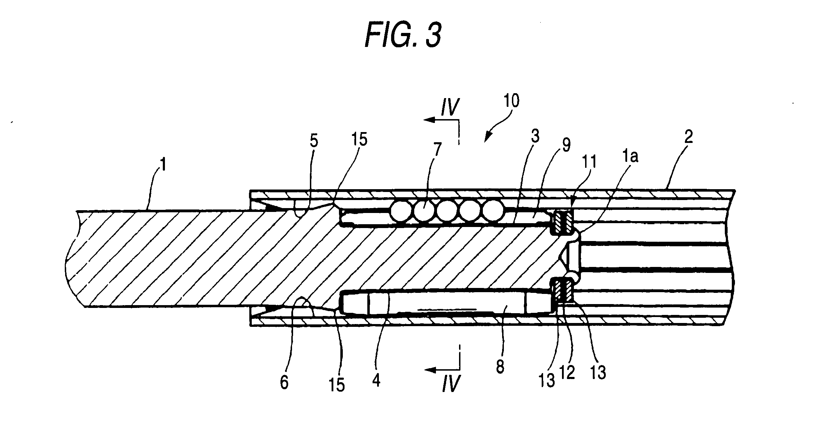

Fig. 3 is a longitudinal cross-sectional view of the first embodiment of the vehicle steering telescopic shaft of the invention.

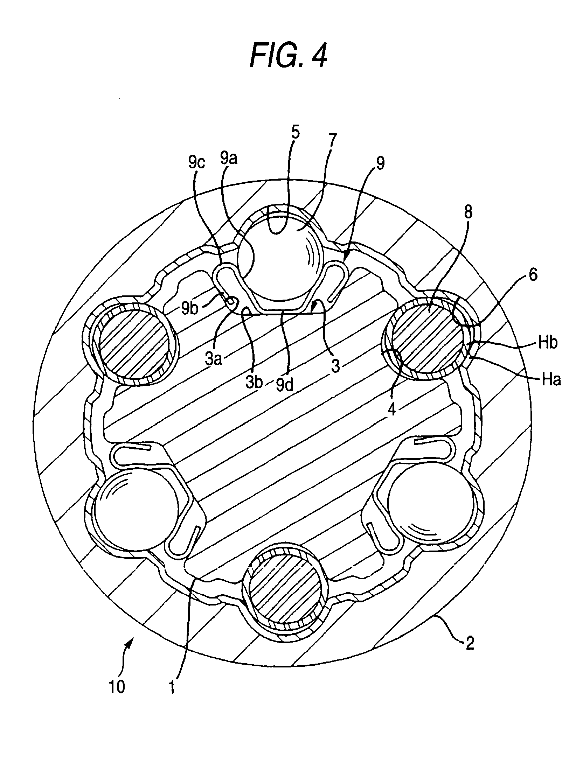

Fig. 4 is a transverse cross-sectional view taken along the line IV-IV of Fig. 3.

As shown in Figs. 2 and 3, the telescopic shaft 10 comprises a male shaft 1 and female shaft 2 which are slidably fitted together in a manner to prevent a relative rotation therebetween. Universal joints UJ are connected to the male shaft 1 and the female shaft 2, respectively.

As shown in Fig. 4, three axial grooves 3 are formed in an outer peripheral surface of the male shaft 1, and extend therealong, and are circumferentially equally spaced an angle of 120 degrees from one another. Similarly, three axial grooves 5 are formed in an inner peripheral surface of the female shaft 2, and extend therealong, and are circumferentially equally spaced an angle of 120 degrees from one another.

A plurality of rigid spherical members (rolling members or balls) 7 are rollably interposed between each mating pair of opposed axial grooves 3 and 5 of the male and female shafts 1 and 2, the plurality of spherical members 7 rolling when the two shafts 1 and 2 move relative each other in the axial direction. Each of the axial grooves 5 of the female shaft 2 has a generally arc-shaped or Gothic arch-shaped in transverse cross-section.

Each of the axial grooves 3 of the male shaft 1 includes a pair of inclined flat side surfaces 3a, and a flat bottom surface 3b extending between the pair of side surfaces 3a.

A leaf spring 9 is interposed between each axial groove 3 of the male shaft 1 and the corresponding row of spherical members 7, and is held in contact with these spherical members 7 to preload them.

The leaf spring 9 includes a pair of spherical member-contacting portions 9a of a generally arc-shape held in contact with the row of spherical members 7, a pair of groove surface-contacting portions 9b which are bent relative to the respective spherical member-contacting portions 9a in circumferentially-spaced relation thereto, and are held in contact with the respective flat side surfaces 3a of the axial groove 3 of the male shaft 1, a pair of urging portions 9c each bent to resiliently urge the corresponding spherical member-contacting portion 9a and groove surface-contacting portion 9b away from each other, and a flat bottom portion 9d which interconnects the pair of spherical member-contacting portions 9a, and is opposed to the flat bottom surface 3b of the axial groove 3.

Each of the pair of urging portions 9c is bent into a generally U-shape or arcuate-shape, and resiliently urges the corresponding spherical member-contacting portion 9a and groove surface-contacting portion 9b away from each other. The bent portion (9c or 9b) of the leaf spring 9 is symmetrical with respect to a median plane thereof, and therefore has a uniform shape over the entire length of the leaf spring 9.

In this embodiment, that portion of the spherical member-contacting portion 9a for contact with the spherical members 7 is formed into a generally arc-shape having a radius lager than the radius of the spherical member 7, as shown in Fig. 4. Therefore, a pressure of contact of the spherical member-contacting portion 9a with the spherical members 7 is lower as compared with the case where the spherical member-contacting portion 9a is formed into a flat shape.

As shown in Fig. 4, three axial grooves 4 are formed in the outer peripheral surface of the male shaft 1, and extend therealong, and are circumferentially equally spaced an angle of 120 degrees from one another. Similarly, three axial grooves 6 are formed in the inner peripheral surface of the female shaft 2, and extend therealong, and are circumferentially equally spaced an angle of 120 degrees from one another.

A rigid cylindrical member 8 (a slide member or a needle roller) is interposed between each axial groove 4 of the male shaft 1 and the corresponding axial groove 6 of the female shaft 2 in such a manner that a very small gap is formed between the cylindrical member 8 and the inner surface of each of the opposed axial grooves 4 and 6. Each cylindrical member 8 has tapering opposite end portions. These cylindrical members 8 slide when the male and female shafts 1 and 2 move relative to each other in the axial direction. Each of the axial grooves 4, as well as each of the axial grooves 6, has a generally arc-shaped or Gothic arch-shaped transverse cross-section. As shown in Fig. 4, the axial groove 4 is so shaped as to contact the cylindrical member 8 at two portions thereof. Similarly, the axis groove 6 is so shaped as to contact the cylindrical member 8 at two portions thereof.

A smaller-diameter portion 1a is formed at an end portion of the male shaft 1. A stopper plate 11 for limiting the axial movement of the needle rollers 8 is mounted on the smaller-diameter portion 1a. The stopper plate 11 comprises an axially-preloading resilient member (that is, a coned disk spring) 12, and a pair of flat plates (that is, flat washers) 13 and 13 holding the axially-preloading resilient member 12 therebetween.

Namely, in this embodiment, one flat plate 13, the axially-preloading resilient member 12 and the other flat plate 13 are sequentially fitted on the smaller-diameter portion 1a, and then the smaller-diameter portion 1a is press-deformed, thereby firmly fixing the stopper plate 11 to the smaller-diameter portion 1a.

Thus, the stopper plate 11 is fixed to the male shaft 1 against relative axial movement. The stopper plate 11 can be fixed to the male shaft 1 by any other suitable means (such as a retaining ring, threaded means or a push nut) than the press-deforming. The stopper plate 11 is so constructed that the inner flat plate 13 abuts against the needle rollers 8 to apply a suitable preload thereto, thereby preventing the needle rollers 8 from axial movement.

In this embodiment, six projecting portions 15, each having a generally arcuate shape, are formed on the outer peripheral surface of the male shaft 1, and are arranged generally coaxially with the respective axial grooves 3 and 4 in the axial direction, and are disposed adjacent respectively to the six grooves 3 and 4 in the axial direction. The six projecting portions 15 are loosely fitted respectively in the six axial grooves 5 and 6 of the female shaft 2 in such a manner that a gap is formed between each projecting portion 15 and the corresponding axial groove 5, 6 both in the radial and circumferential directions.

Therefore, in the event that any of the rows of spherical members 7 or any of the cylindrical members 8 is either disengaged from the male shaft 1 or broken from some cause, the corresponding projecting portion 15 is fitted into the corresponding axial groove 5, 6 of the male shaft 2, and therefore the male shaft 1 and the female shaft 2 can transmit a torque, thus performing a fail-safe function.

At this time, the driver can feel or perceive severe rattling of the steering wheel since the gap is formed between each projecting portion 15 and the corresponding axial groove 5, 6, and therefore the driver can realize a failure of the steering system.

And besides, the projecting portions 15 of the male shaft 1 are disposed coaxially with the rows of spherical members 8 and cylindrical members 8 in the axial direction, respectively, and therefore the projecting portions 15 also function as stoppers for limiting the axial movement of the rows of spherical members 7 and cylindrical members 8. Thus, the possibility of disengagement of the spherical members 7 and cylindrical members 8 is reduced, thereby further enhancing the fail-safe function. Namely, the stopper plate 11 serves as the stopper for the rows of spherical members 7 and the cylindrical members 8 at one ends of the axial grooves 3 and 4, while the projecting portions 15 serve as stoppers for the rows of spherical members 7 and the cylindrical members 8 at the other ends of the axial grooves 3 and 4.

Furthermore, the projecting portions 15 of the male shaft 1 are disposed coaxially with the rows of spherical members 8 and cylindrical members 8 in the axial direction, respectively, and therefore the dimensions of the male shaft 1 and female shaft 2 in the radial direction can be reduced so as to achieve a compact design.

A lubricant may be coated on the axial groove portions 3 of the male shaft 1, the axial groove portions 5 of the female shaft 2, the leaf springs 9 and the spherical members 7. Also, the lubricant may be coated the axial groove portions 4 of the male shaft 1, the cylindrical members 8 and the axial grooves 6 of the female shaft 2.

Note that as shown in Fig.3, tapered faces can be formed on both ends of the cylindrical member 8. Further, although a single needle roller is adopted as shown in Fig. 3, it is also acceptable to arrange pluralities of needle roller along with the axial direction.

In addition, in Fig. 4, although the axial direction grooves 3, 5 between which the spherical members 7 are disposed, and the axial grooves 4, 6, between which the cylindrical member 8 is disposed, are formed on three portions along with the circumferential direction of the shafts, respectively, the present invention is not limited this structure. The axial grooves 3, 4, 5, 6 can be formed on only one portions on the shafts.

Further, in Fig. 4, the resilient member 9 is disposed between the male shaft 1 and the spherical member 8. However, the resilient member 9b can be disposed between the female shaft 2 and the spherical member 8.

In the telescopic shaft of the above construction, the rows of spherical members 7 are interposed between the male shaft 1 and the female shaft 2, and each row of spherical members 7 is preloaded on the female shaft 2 in the radial direction and circumferential direction by the leaf spring 9 to such a degree that rattling between the male and female shafts 1 and 2 will not occur. Therefore, the rattling between the male shaft 1 and female shaft 2 can be surely prevented, and besides when the male shaft 1 and the female shaft 2 move relative to each other in the axial direction, the two shafts 1 and 2 can slide relative to each other with a stable sliding load without rattling.

When a torque is transmitted, each leaf spring 9 is resiliently deformed to restrain the corresponding row of spherical members 7 in the circumferential direction, and at the same time the three cylindrical members 8, interposed between the male and female shafts 1 and 2, mainly function to transmit the torque.

For example, since the leaf springs 9 preload the two shafts 1 and 2, when torque is inputted from the male shaft 1, no rattling occurs at an initial stage, and the leaf springs 9 produce a reaction force against the torque, thereby transmitting the torque. At this time, the overall torque transmission is effected in such a manner that the torque, transmitted between the male shaft 1, the leaf springs 9, the rows of spherical members 7 and the female shaft 2, is balanced with the inputted torque.

Then, as the torque further increases, in rotating the male and female shafts 1 and 2 via the cylindrical members 8, the gap between the male and female shafts 1 and 2 in the rotational direction is eliminated, and the torque, increasing thereafter, is transmitted by the cylindrical members 8 via the male and female shafts 2. Therefore, rattling between the male and female shafts 1 and 2 in the rotational direction can be surely prevented, and also the torque can be transmitted in a highly rigid condition.

In this embodiment, in addition to the spherical members 7, the cylindrical members 8 are provided, and therefore when a large torque is inputted, a large proportion of the load can be supported by the cylindrical members 8. Therefore, the pressure of contact of each axial groove 5 of the female shaft 2 with the corresponding row of spherical members 7 can be decreased, thereby enhancing the durability, and besides when a large torque is inputted, the torque can be transmitted in a highly rigid condition.

As described above, in this embodiment, the stable sliding load can be obtained, and besides rattling in the rotational direction can be positively prevented, so that the torque can be transmitted in the highly rigid condition.

Preferably, each of the spherical members 7 comprises a rigid ball. Preferably, each of the rigid cylindrical members comprises a needle roller.

The cylindrical member (hereinafter referred to as "needle roller") 8 bears a load by line contact, and therefore has various advantages, such as that the contact pressure can be kept to a lower level, over in a case where balls bearing a load by point contact. As compared with a ball rolling structure in which rows of balls are provided respectively in all of six mating pairs of axial grooves in the female and male shafts, the structure of the invention is advantageous in the following respects.
1) The effect of the damping capacity at the slide portions is higher as compared with the ball rolling structure. Therefore, the vibration absorbing performance is higher.
2) Each needle roller is very slightly contacted with the male shaft and the female shaft, and therefore a variation of the sliding load can be kept to a narrow range, and therefore vibration due to this variation will not be transmitted to the steering wheel.
3) When the same torque is transmitted, the contact pressure of the needle roller can be kept to a lower level, and therefore the length of the structure in the axial direction can be made smaller, so that a space can be used efficiently.
4) The number of the component parts can be reduced.
5) The efficiency of the assembling operation can be made higher.
6) The cost for the assembling operation can be reduced.

Thus, the needle rollers serve as keys for the transmission of the torque between the male and female shafts 1 and 2, and also can be held in sliding contact with the inner peripheral surface of the female shaft 2. The use of the needle rollers is advantageous over the conventional spline fitting structure in the following respects.
1) The needle rollers are mass produced, and therefore are very inexpensive.
2) The needle roller, after subjected to a heat treatment, is polished, and therefore has high surface hardness, and is excellent in wear resistance.
3) The needle roller is polished, and therefore its surface roughness is fine, and its friction coefficient during the sliding movement is low, and therefore a sliding load can be kept to a low level.
4) According to a condition of use, the length and arrangement of the needle rollers can be changed, and therefore the needle rollers can meet various applications without changing a design philosophy.
5) There are occasions when the friction coefficient during the sliding movement need to be lowered, depending on the condition of use. In such a case, by applying a surface treatment only to the needle rollers, sliding characteristics thereof can be changed, and therefore the needle rollers can meet various applications without changing a design philosophy.
6) Needle rollers of various sizes, different in outer diameter on the order of several microns, can be produced at low costs, and therefore by selecting the needle rollers of a desired outer diameter, the gap between the male shaft, the needle roller and the female shaft can be kept to a minimum. Therefore, the torsional rigidity of the shaft can be easily enhanced.

In this embodiment, a surface hardening treatment is applied to the inner peripheral surface of the female shaft 2, thereby forming a hard layer Ha thereon. The surface harness of this inner peripheral surface is Hv 400 or more. The surface hardening treatment does not always need to be applied to the entire inner peripheral surface of the female shaft 2, and may be applied at least to the inner surfaces of the axial grooves 6 which the respective needle rollers (cylindrical members) 8 contact, and the surface hardening treatment may also be applied to the inner surfaces of the axial grooves 5 which the respective rows of balls 7 contact.

The thickness of the hard layer Ha is 10 µm to 100 µm, and for example gas nitrocarburizing treatment is effected as this surface hardening treatment.

A surface hardening treatment is also applied to the surface of each cylindrical member 8 by a heat treatment, thereby forming a hard layer Hb thereon. The surface hardness of the cylindrical member 8 is not smaller than 400 Hv. However, the surface hardening treatment for the cylindrical members 8 can be omitted.

With this construction, the inner peripheral surface of the female shaft is prevented from deformation and wear under a high contact pressure, so that the smooth sliding movement can be effected.

It is preferable to use low-friction type grease, having molybdenum disulfide or molybdenum added thereto, as the lubricant.

Preferably, surface roughness of the cylindrical member 8 is not larger than Ra 0.4. Preferably, surface roughness of the inner peripheral surface of the female shaft 2 is not larger than Ra 0.4.

### (Second Embodiment)

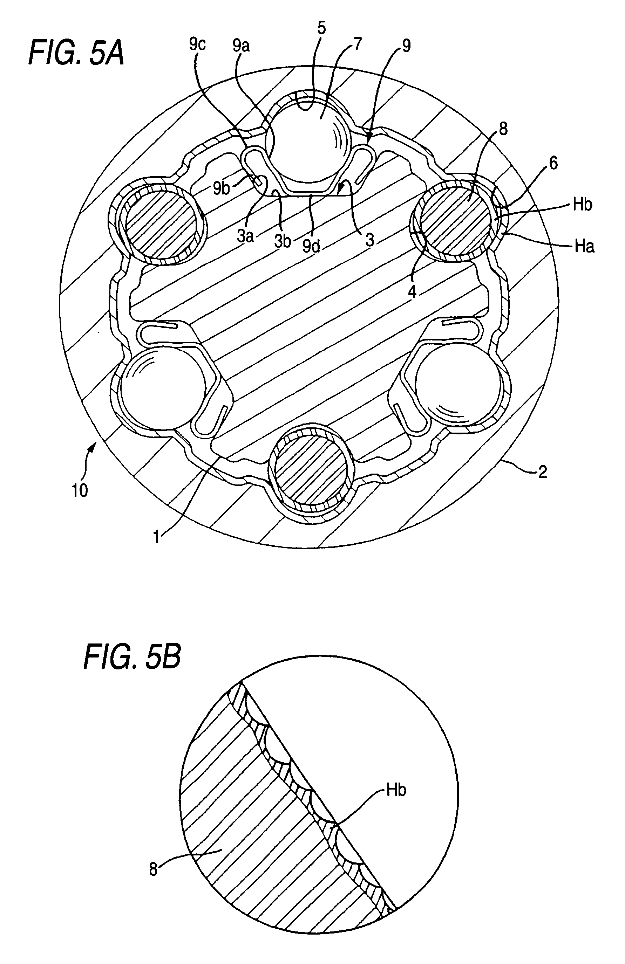

Fig. 5A shows a second embodiment of the invention, and is a transverse cross-sectional view taken along the line IV-IV of Fig. 3. Fig. 5B an enlarged cross-sectional view showing a portion of an outer surface of a cylindrical member.

In this embodiment, a surface hardening treatment is applied to an inner peripheral surface of a female shaft 2, thereby forming a hard layer Ha, as described above for the first embodiment. The surface hardening treatment does not always need to be applied to the entire inner peripheral surface of the female shaft 2, and may be applied at least to inner surfaces of axial grooves 6 which the respective needle rollers (cylindrical members) 8 contact, and the surface hardening treatment may also be applied to inner surfaces of axial grooves 5 which respective rows of balls 7 contact. A surface hardening treatment is also applied to the surface of each cylindrical member 8 by a heat treatment, thereby forming a hard layer Hb thereon.

In addition to the hard layer Hb (which is formed by the surface hardening treatment, and has surface harness of not smaller than Hv 400), fine pits and projections are formed uniformly on the outer surface of the cylindrical member 8 by shot peening or tumbling. Therefore, grease is held on this roughened surface, so that the smooth sliding movement can be effected.

In this case, preferably, surface roughness of the cylindrical member 8 is not larger than Ra 0.8. Preferably, surface roughness of the inner peripheral surface of the female shaft 2 is not larger than Ra 0.4.

### (Third Embodiment)

In this embodiment, a surface hardening treatment is applied to an inner peripheral surface of a female shaft 2, thereby forming a hard layer Ha, as described above for the first embodiment. The surface hardening treatment does not always need to be applied to the entire inner peripheral surface of the female shaft 2, and may be applied at least to inner surfaces of axial grooves 6 which respective needle rollers (cylindrical members) 8 contact, and the surface hardening treatment may also be applied to inner surfaces of axial grooves 5 which respective rows of balls 7 contact. A surface hardening treatment is also applied to a surface of each cylindrical member 8 by a heat treatment, thereby forming a hard layer Hb thereon.

In addition to the hard layer Ha (which is formed by the surface hardening treatment, and has surface harness of not smaller than Hv 400), fine pits and projections are formed uniformly on an inner surface of each of axial grooves 6 of the female shaft 2 (with which the corresponding cylindrical member 8 contacts) by shot peening. The fine pits and projections may also be formed on an entire surface of the inner surface of each of axial grooves 5.

Therefore, grease is held on the roughened surfaces, so that the smooth sliding movement can be effected.

In this case, preferably, surface roughness of the cylindrical member 8 is not larger than Ra 0.4. Preferably, surface roughness of the inner peripheral surface of the female shaft 2 is not larger than Ra 0.8.

### (Fourth Embodiment)

In this embodiment, a surface hardening treatment is applied to an inner peripheral surface of a female shaft 2, thereby forming a hard layer Ha, as described above for the first embodiment. The surface hardening treatment does not always need to be applied to the entire inner peripheral surface of the female shaft 2, and may be applied at least to inner surfaces of axial grooves 6 which respective needle rollers (cylindrical members) 8 contact, and in this case the surface hardening treatment may also be applied to inner surfaces of axial grooves 5 which respective rows of balls 7 contact. A surface hardening treatment is also applied to the surface of each cylindrical member 8 by a heat treatment, thereby forming a hard layer Hb thereon.

In addition to the hard layer Hb (which is formed by the surface hardening treatment, and has surface harness of not smaller than Hv 400), fine pits and projections are formed uniformly on the outer surface of the cylindrical member 8 by shot peening or tumbling.

In addition to the hard layer Ha (which is formed by the surface hardening treatment, and has surface harness of not smaller than Hv 400), fine pits and projections are formed uniformly on an inner surface of each of axial grooves 6 of the female shaft 2 (with which the corresponding cylindrical member 8 contacts) by shot peening. The fine pits and projections may also be formed on an inner surface of each of axial grooves 5.

Therefore, grease is held on the roughened surfaces, so that the smooth sliding movement can be effected.

### (Fifth Embodiment)

Although not shown in the drawings, this embodiment differs from the second embodiment only in that a surface hardening treatment as described above for the second embodiment is not applied to an inner peripheral surface of a female shaft 2.

The other construction, operation and advantageous effects are similar to those of the second embodiment, and there is achieved an additional advantage that the cost can be reduced. When the female shaft 2 is produced by a method (such as forging) in which sufficient work hardening can be expected, it is only necessary to apply a surface hardening treatment and a roughening treatment (pits and projections) to the second torque transmitting members (cylindrical members).

In this case, preferably, surface roughness of the cylindrical member 8 is not larger than Ra 0.8. Preferably, surface roughness of the inner peripheral surface of the female shaft 2 is not larger than Ra 0.8.

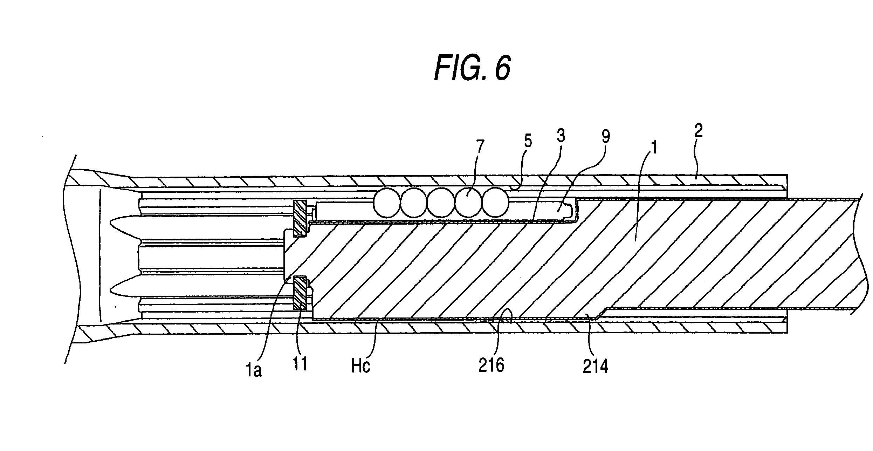

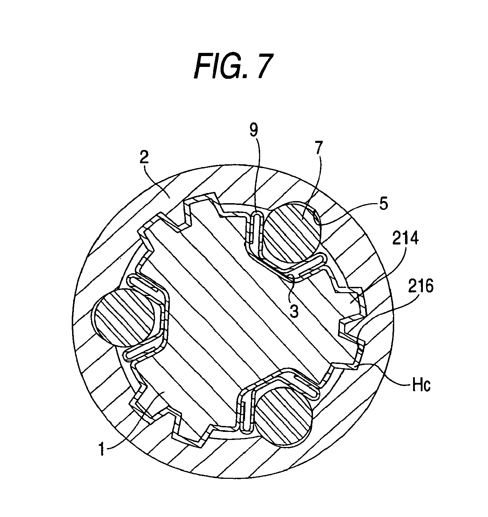

The sixth embodiment according to the present invention is shown in Figs. 6 and 7. The sixth embodiment is a modification of the above described first and second embodiment of the present invention. The elements of the sixth embodiment which are the same as those of the first embodiment are denoted the same reference, and detailed explanation is omitted.

In the sixth embodiment, the cylindrical members are replaced by a spline portion. That is, the telescopic shaft according to the sixth embodiment comprising a male shaft and a female shaft which are slidably spline-fitted together in manner to prevent a relative rotation therebetween.

In stead of the pluralities of rigid cylindrical members 8 (sliding member or needle roller), an axial protrusion 214 for spline fitting is integrally formed on the outer peripheral surface of the male shaft. In accordance thereto, an axial groove 216 for spline fitting is formed on the inner peripheral surface of the female shaft 2. The axial protrusion 216 and the axial groove 214 are spline fitted each other in order to make up the torque transmitting portion.

In the sixth embodiment, the surface hardening treatment is applied to at least one of the outer peripheral surface of the male shaft 1 or the inner peripheral surface of the female shaft in order to form the hard layer Hc having surface hardness of Hv 400 or more.

Note that although the above description mentions the torque transmitting portion formed by spline-fitting of the male shaft and the female shaft, the present invention is not limited thereto. In stead of spline-fitting, The fitting configuration can be formed by concavo-convex fitting or serration fitting.

According to the sixth embodiment, since the torque transmitting portion is formed by spline-fitting of the male and the female shaft, when the torque is not transmitted, rattling between the male shaft 1 and the female shaft can be reliably prevented. Further, when the male shaft 1 and the female shaft 2 moves relatively, the male shaft 1 and the female shaft 2 can be slid in the axial direction by stable sliding load.

The structure, operation and effects are similar to the above-described first embodiment, and the other detailed descriptions are omitted.

The present invention is not limited to the above embodiments, and various modifications can be made.

While there has been described in connection with the preferred embodiments of the present invention, it will be obvious to those skilled in the art that various changes and modification may be made therein without departing from the present invention, and it is aimed, therefore, to cover in the appended claim all such changes and modifications as fall within the true spirit and scope of the present invention.

## Claims

1. A telescopic shaft comprising:
a male shaft and a female shaft which are slidably fitted together in a manner to prevent a relative rotation therebetween;
a preloadingly-acting torque transmitting portion for transmitting torque between the male and female shafts in a manner to preload the two shafts, the preloadingly-acting torque transmitting portion comprising:
at least one axial groove formed in an outer peripheral surface of the male shaft;
at least one axial groove formed in an inner peripheral surface of the female shaft; and
a first torque transmitting member interposed between the two axial grooves through a resilient member; and
a rigidly-acting torque transmitting portion for transmitting the torque between the male and female shafts through contact of rigid members, the rigidly-acting torque transmitting portion includes:
at least one axial groove formed in the outer peripheral surface of the male shaft;
at least one axial groove formed in the inner peripheral surface of the female shaft; and
a second torque transmitting member interposed between the two axial grooves,
wherein contact portions of the rigidly-acting torque transmitting portion have surface hardness of Hv 400 or more.

2. A telescopic shaft comprising:
a male shaft and a female shaft which are slidably fitted together in a manner to prevent a relative rotation therebetween;
a preloadingly-acting torque transmitting portion for transmitting torque between the male and female shafts in a manner to preload the two shafts, the preloadingly-acting torque transmitting portion comprising:
at least one axial groove formed in an outer peripheral surface of the male shaft;
at least one axial groove formed in an inner peripheral surface of the female shaft; and
a first torque transmitting member interposed between the two axial grooves through a resilient member; and
a rigidly-acting torque transmitting portion for transmitting the torque between the male and female shafts through contact of rigid members, the rigidly-acting torque transmitting portion includes:
at least one axial groove formed in the outer peripheral surface of the male shaft;
at least one axial groove formed in the inner peripheral surface of the female shaft; and
a second torque transmitting member interposed between the two axial grooves,
wherein the second torque transmitting member has hardness of Hv 400 or more, and
the axial groove, which contacts with the second torque transmitting member and which is also formed on the male or female shaft, has hardness of Hv 400 or more.

3. The telescopic shaft according to claim 1, wherein
the first torque transmitting member comprises rolling members which roll when the male and female shafts move relative to each other in their axial direction, and
the second torque transmitting member comprises a slide member which slides when the male and female shafts move relative each other in their axial direction.

4. The telescopic shaft according to claim 1, wherein
a surface hardening treatment is applied to an inner surface of the axial groove of the female shaft which contacts the second torque transmitting member, and
a surface hardening treatment is applied to the second torque transmitting member.

5. The telescopic shaft according to claim 4, wherein
in addition to the surface hardening treatment, fine pits and projections are formed uniformly on the second torque transmitting member by shot peening or tumbling.

6. The telescopic shaft according to claim 4, wherein in addition to the surface hardening treatment, fine pits and projections are uniformly formed by shot peening on the inner surface of the axial groove of the female shaft which contacts the second torque transmitting member.

7. A telescopic shaft comprising:
a male shaft and a female shaft which are slidably fitted together in a manner to prevent a relative rotation therebetween;
a preloadingly-acting torque transmitting portion for transmitting torque between the male and female shafts in a manner to preload the two shafts, the preloadingly-acting torque transmitting portion comprising:
at least one axial groove formed in an outer peripheral surface of the male shaft;
at least one axial groove formed in an inner peripheral surface of the female shaft; and
a first torque transmitting member interposed between the two axial grooves through a resilient member; and
a rigidly-acting torque transmitting portion for transmitting the torque between the male and female shafts through contact of rigid members, the rigidly-acting torque transmitting portion includes:
at least one axial groove formed in the outer peripheral surface of the male shaft;
at least one axial groove formed in the inner peripheral surface of the female shaft; and
second torque transmitting portions formed on the respective two axial grooves formed on the male and the female shaft,
wherein the second torque transmitting portions of the rigidly-acting torque transmitting portion have surface hardness of Hv 400 or more.

8. The telescopic shaft according to claim 7, wherein in
the male shaft and the female shaft fit each other so as to make up the second torque transmitting portions.

9. The telescopic shaft according to claim 7, wherein in
the male shaft and the female shaft fit each other in a spline fitting manner so as to make up the second torque transmitting portions.

10. The telescopic shaft according to claim 1, wherein in
the first torque transmitting member comprises at least one of spherical members.

11. The telescopic shaft according to claim 1, wherein in
the second torque transmitting member comprises at least one of cylindrical members.

12. The telescopic shaft according to claim 2, wherein in
the first torque transmitting member comprises at least one of spherical members.

13. The telescopic shaft according to claim 2, wherein in
the second torque transmitting member comprises at least one of cylindrical members.

14. The telescopic shaft according to claim 7, wherein in
the first torque transmitting member comprises at least one of spherical members.

15. The telescopic shaft according to claim 7, wherein in
the second torque transmitting member comprises at least one of cylindrical members.

16. The telescopic shaft according to claim 1, wherein in the telescopic shaft is used for a vehicular steering.

17. The telescopic shaft according to claim 2, wherein in the telescopic shaft is used for a vehicular steering.

18. The telescopic shaft according to claim 7, wherein in the telescopic shaft is used for a vehicular steering.
